Europäisches Patentamt

European Patent Office

Office européen des brevets

(19)

(11) Publication number: **0 183 491**
A2

(12)

# EUROPEAN PATENT APPLICATION

(21) Application number: **85308485.3**

(22) Date of filing: **21.11.85**

(51) Int. Cl.⁴: **H 01 J 29/89**

(30) Priority: **29.11.84 JP 252594/84**

(43) Date of publication of application:
**04.06.86 Bulletin 86/23**

(84) Designated Contracting States:
**CH DE FR GB LI NL SE**

(71) Applicant: **MASAYUKI FUJIWARA**
**100-18, Minosawa Naka-ku**
**Yokohama Kanagawa(JP)**

(72) Inventor: **MASAYUKI FUJIWARA**
**100-18, Minosawa Naka-ku**
**Yokohama Kanagawa(JP)**

(74) Representative: **Palmer, Roger et al,**
**Page, White and Farrer 5 Plough Place New Fetter Lane**
**London EC4A 1HY(GB)**

(54) Filter for cathode ray tube.

(57) A filter to be secured to a cathode ray tube of a display device of an office automation equipment such as a computer or a word processor, wherein an electrically conductive filament is stretchedly provided on a frame. The conductive filament includes a monofilament made of a synthetic resin material, a metallic film coated on this monofilament and a black or gray paint coated on this metallic film. The frame has a shape conforming to the cathode ray tube so as to be detachably secured to the cathode ray tube.

*F I G. 1*

0183491

## FILTER FOR CATHODE RAY TUBE

This invention relates to techniques effectively applied to a filter for a cathode ray tube (hereinafter referred to as a "CRT") in a computer, a word processor and the like.

Along with the progress of the so-called office automation (hereinafter referred to as "OA") equipment including a computer, a word processor and the like in recent years, the operation of the OA equipment, which has been limited to some engineers, is required of common people widely.

Nevertheless, the propagation of the OA equipment has been raising problems which have not been expected so far.

For example, it has been known that, among operators operating the OA equipment while carefully looking at a screen of a CRT for a long period of time, there are many ones who complain of symptoms including eye fatigue, lowered eyesight, nausea, giddiness and the like.

To remedy the eye fatigue, there has heretofore been adopted such a method that a filter formed of a black or gray and semitransparent plastic panel is secured to the front surface of the CRT screen whereby the generation of glare is suppressed to improve the contrast of the screen, so that the eyes of the operator are protected. However, this method is disadvantageous in that, since the surface of the plastics reflects the light, the screen becomes hard to look at.

Further, recently, there is some fear about the adverse influence of the electromagnetic wave emanating from the CRT screen to a human body, particularly to a pregnant woman.

To avoid this influence, it is conceivable that the operator is caused to wear a uniform formed of an electromagnetic shield material. However, this method is disadvantageous in that the protection is limited only to the portions of the human body, being covered by the uniform, and it is troublesome to put on or off the uniform.

An object of the present invention is to prevent lowered eyesight of an operator performing the operation while carefully looking at a CRT screen and to suppress the adverse influence of the electromagnetic wave emanating from the CRT to a human body.

More particularly, in a filter to be secured to the CRT screen, the filter is consisted of a fabric mesh provided on a frame, the fabric mesh is comprised of a monofilament of synthetic resin, a metallic film coated on the monofilament of synthetic resin, and a black or gray paint coated on the metallic film, whereby the reflection of light from the outside is prevented to lay emphasis on the contrast of the CRT screen, and further, the coating of the metallic film onto the monofilament makes it possible to obtain a shield effect to the electromagnetic wave, so that the eye fatigue and lowered eyesight of the operator performing the operation while carefully looking at the CRT screen can be avoided and the adverse influence of the electromagnetic wave emanating from the CRT to the human body can be prevented.

The above and other objects and features of the present invention will become more apparent when referred to the following description given in conjunction with the accompanying drawings, wherein like reference numerals denote like elements, and in which:

Fig. 1 is a perspective view showing the state where the filter embodying the present invention is secured to a CRT of a terminal component of a computer;

Fig. 2 is an enlarged sectional view of the filter shown in Fig. 1; and

Fig. 3 is an enlarged sectional view showing the filament used in the filter of this embodiment.

Referring now to the drawings, a filter 1 in this embodiment is constructed such that a screen mesh 3 obtained by weaving filaments 2 is stretchedly secured to a window-shaped frame member 4 in a manner to cover the whole surface of a CRT 6 of a terminal component 5 of a computer.

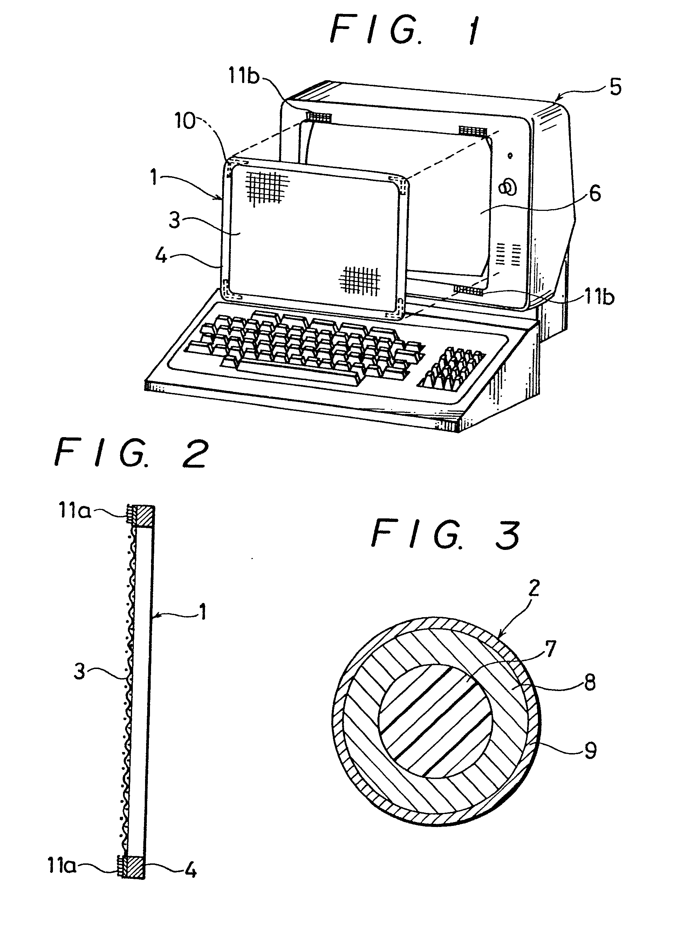

As shown in Fig. 3, the filament 2 is manufactured such that a monofilament 7 made of polyester resin, polyamide resin or the like and having a diameter of about 20 denier is used as a core material, a metallic film 8 made of nickel is coated on the monofilament 7 by non-electrolytic plating, electrolytic plating or vacuum deposition, and further, a black or gary paint 9 such as urethane resin mixed with carbon black is coated on the monofilament 7 thus plated or deposited by painting, dipping or the like.

Here, the coating of the metallic film 8 is to give the screen mesh 3 the electromagnetic shield effect, and the coating of the black or gray paint 9 is to prevent glare due to the reflection of light from being generated.

In the manufacturing of the filter 1 of this embodiment, the monofilaments 7 of synthetic resin are alternately woven in the longitudinal and lateral directions for example so as to obtain the screen mesh 3. This screen mesh 3 is treated by electrolytic plating to coat the monofilament 7 with the metallic film 8. Further, the screen mesh 3 is dipped into the bath of the black or gray paint 9 to coat the metallic film 8 with the black or gray paint 9. Of course, if desired, it is possible to weave screen mesh 3 by using the filament 2 after coating the monofilament 7 with the metallic film 8 or after coating the metallic film 8 with the black or gray paint 9. In this embodiment, it is desirable that the numerical aperture of the screen mesh 3 is about 135 mesh/inch. If the numerical aperture is excessively smaller than this numerical value, then the filaments 2 are superposed on dots displayed in the CRT 6 to make the picture elements unclear, and, in contrast therewith, if the numerical aperture is excessively larger than this numerical value, then the intrusion of light to the surface of the CRT 6 is increased to generate glare.

On the other hand, expandable resin such as black or gray-colored styrol-butadiene resin, polystyrene resin or ABS resin is molded to provide an elongate piece, and four such elongate pieces are combined with one another to provide the frame member 4 conforming itself to the shape of the CRT 6, in four corners of which, there are provided L-shaped reinforcing metals 10 for sufficiently holding the tension.

A screen mesh 3 cut to a predetermined shape is stretchedly secured to this frame member 4 with the sufficient tension being applied thereto, to thereby provide the filter 1 of this embodiment.

The filter 1 thus obtained may detachably secured to the CRT 6 by means of surface fasteners 11a and 11b provided at portions or the entire circumferences of the frame member 4 and the CRT 6 of the terminal component as shown in Figs. 1 and 2, may be secured by means of opposite surface adhesive tapes, not shown, or may be secured by means of fixtures, not shown.

Detailed description has been given of the present invention invented by the present inventor in conjunction with the embodiment. However, the present invention is not limited to this, and, needless to say, the present invention may be modified in various ways without departing from the spirit of the invention.

For example, as the material of the frame member 4, in addition to the ones described above, any one may be used as far as the material such as ABS resin has a mechanical strength sufficient for bearing the tension of the screen mesh. Needless to say, the frame member 4 may be one integrally molded by use of a die or the like.

Further, the metallic film 8 coated on the filament 7 need not necessarily be limited to nickel, and may be copper, gold, silver or the like, for example.  In particular, if copper is used, then a high electromagnetic shield effect can be attained.

Additionally, the present invention is applicable to the CRT screen of a domestic television receiver and the like.

According to the present invention, in the filter to be secured to the CRT screen, the filter is comprised of a frame and a mesh of filaments stretchedly provided on said frame, said filament is consisted of a monofilament made of synthetic resin, a metallic film coated on the monofilament, and a black or gray paint coated on said metallic film, whereby the generation of glare due to the light from the outside can be prevented to lay emphasis on the contrast on the CRT screen, so that such combined effects are achieved that the eye fatigue and lowered eyesight of the operator can be avoided and the electromagnetic wave emanating from the CRT can be shielded by use of the filter, thus enabling to suppress the adverse influence of the electromagnetic wave to the human body.

CLAIMS:

1.      A filter to be secured to a cathode ray tube, comprising a frame and a mesh of filaments stretched across said frame, each said filament consisting of a monofilament of synthetic resin, a metallic film coated on said monofilament, and a black or gray paint coated on said metallic film.

2.      A filter to be secured to a cathode ray tube as set forth in Claim 1, wherein said frame has a shape comforming to said cathode ray tube and is made of synthetic resin.

3.      A filter to be secured to a cathode ray tube as set forth in Claim 2, wherein said frame is of a generally rectangular shape and has reinforcing means embedded in corner portions thereof, respectively.

4.      A filter to be secured to a cathode ray tube as set forth in Claim 1, wherein said frame is colored black or gray.

5.      A filter to be secured to a cathode ray tube as set forth in Claim 1, wherein said monofilament is made of polyester resin.

6.      A filter to be secured to a cathode ray tube as set forth in Claim 1, wherein said metallic film is made of nickel.

7.      A filter to be secured to a cathode ray tube as set forth in Claim 1, wherein said black or gray paint is made of synthetic resin mixed with carbon black.

## F I G.  1

## F I G.  2

## F I G.  3